(19) Europäisches Patentamt
European Patent Office
Office européen des brevets

(11) **EP 4 475 525 A1**

(12) **EUROPEAN PATENT APPLICATION**

(43) Date of publication:
**11.12.2024 Bulletin 2024/50**

(21) Application number: **24179773.7**

(22) Date of filing: **04.06.2024**

(51) International Patent Classification (IPC):
**H04N 13/106** (2018.01)   **H04N 13/128** (2018.01)

(52) Cooperative Patent Classification (CPC):
**H04N 13/106; H04N 13/128**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **05.06.2023 JP 2023092378**

(71) Applicant: **CANON KABUSHIKI KAISHA**
**Tokyo 146-8501 (JP)**

(72) Inventors:
• **MOCHIZUKI, Toshihiro**
  **Tokyo 146-8501 (JP)**
• **OKUMURA, Naoto**
  **Tokyo 146-8501 (JP)**

(74) Representative: **TBK**
**Bavariaring 4-6**
**80336 München (DE)**

(54) **IMAGE PROCESSING DEVICE**

(57)   An image processing device according to the present invention includes: acquiring means configured to acquire a first image captured via a first optical system and a second image captured via a second optical system; detecting means configured to detect, as a foreign object region, a region satisfying a predetermined condition in one image out of the first image and the second image; and correcting means configured to correct a pixel value in the foreign object region in the one image by using a pixel value of another image out of the first image and the second image.

*FIG. 2*

**Description**

BACKGROUND OF THE INVENTION

Field of the Invention

The present invention relates to an image processing device.

Description of the Related Art

Technology is known in which two images that have parallax with each other are displayed in order to enable stereoscopic viewing. If a foreign object (e.g., foreign object adhered to an optical system used for image capturing) appears in only one of the two images, stereoscopic viewing becomes difficult, and the sense of immersion in stereoscopic viewing is impaired (the quality of stereoscopic viewing deteriorates).

Japanese Patent Application Publication No. 2010-130549 discloses technology for detecting a foreign object adhered to an optical system, based on parallax between stereo images.

However, even if a foreign object can be detected using the technology disclosed in Japanese Patent Application Publication No. 2010-130549, if the foreign object is not removed from the optical system, the quality of stereoscopic viewing is not improved. Depending on the user, the foreign object may not be removed properly, or more foreign objects may adhere to the optical system or damage the optical system, which may further impair the quality of stereoscopic viewing even more.

SUMMARY OF THE INVENTION

The present invention provides a technique that enables suppressing deterioration in the quality of stereoscopic viewing caused by a foreign object.

The present invention in its first aspect provides an image processing device as specified in claims 1 to 13.

The present invention in its second aspect provides an image processing method as specified in claim 14.

The present invention in its third aspect provides a program processing device as specified in claim 15. The present invention in its fourth aspect provides a computer readable medium processing device as specified in claim 16.

Further features of the present invention will become apparent from the following description of exemplary embodiments with reference to the attached drawings.

BRIEF DESCRIPTION OF THE DRAWINGS

FIG. 1 is a block diagram illustrating an example of the configuration of an image capturing device according to a first embodiment;

FIG. 2 is a block diagram illustrating an example of the configuration of an image processing unit according to the first embodiment;

FIGS. 3A and 3B are schematic diagrams illustrating examples of pixel value distributions according to the first embodiment;

FIG. 4 is a flowchart illustrating an example of image correction processing according to the first embodiment;

FIGS. 5A to 5E are schematic diagrams illustrating examples of various types of data according to the first embodiment;

FIG. 6 is a schematic diagram illustrating an example of image circles according to the first embodiment;

FIG. 7 is a block diagram illustrating an example of the configuration of an image processing unit according to a second embodiment;

FIGS. 8A to 8C are schematic diagrams illustrating an example of a method for determining an effective angle of view according to the second embodiment;

FIG. 9 is a flowchart illustrating an example of image correction processing according to the second embodiment; and

FIGS. 10A to 10E are schematic diagrams illustrating examples of various types of data according to the second embodiment.

DESCRIPTION OF THE EMBODIMENTS

First Embodiment

A first embodiment of the present invention will be described below. Although an example will be described in which the present invention is applied to an image capturing device, the devices to which the present invention can be applied are not limited to an image capturing device. The present invention is applicable to various types of electronic devices (image processing devices) that can perform image processing on a captured image. For example, the present invention is also applicable to a personal computer connected to an image capturing device, a head mounted display connected to an image capturing device, or a video see-through type of head mounted display.

Image Capturing Device

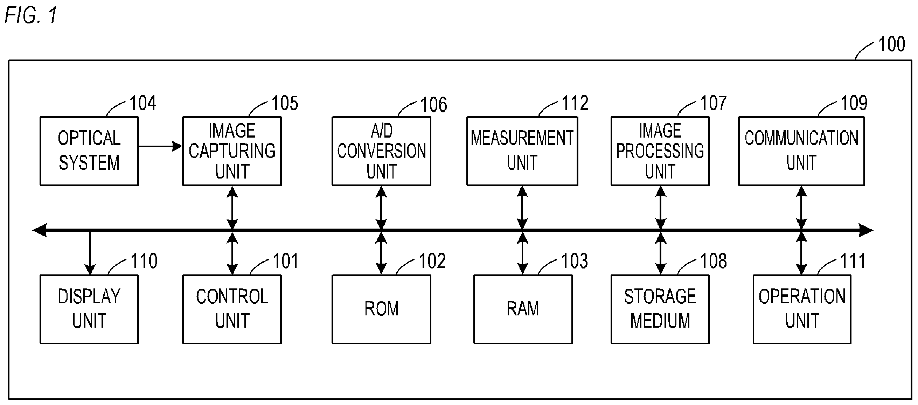

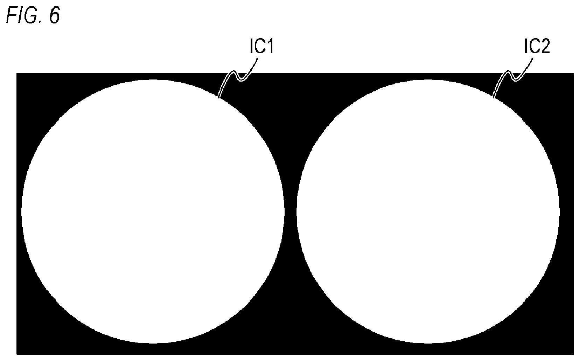

FIG. 1 is a block diagram illustrating an example of the configuration of an image capturing device 100 according to the first embodiment.
A control unit 101 is a CPU, for example, and controls units of the image capturing device 100 by reading a program from a ROM 102, deploying the program to a RAM 103, and executing the program. The ROM 102 is a rewritable nonvolatile memory, and stores various types of data (information) such as programs executed by the control unit 101 and parameters necessary for controlling units. The RAM 103 is a rewritable volatile memory, and is used as a temporary storage area for data output by units of the image capturing device 100.
Optical systems 104A and 104B are optical systems used for image capturing, and each include a lens and an aperture. The control unit 101 can control the optical system 104A to perform focus adjustment and exposure adjustment for an image to be captured via the optical system 104A. The control unit 101 can also control the optical system 104B to perform focus adjustment and exposure adjustment for an image to be captured via the optical system 104B.
An image capturing unit 105 is an imaging element such as a CCD or a CMOS sensor. The optical system 104A and the optical system 104B are arranged side by side in the horizontal direction. Therefore, as shown in FIG. 6, in the image capturing unit 105, an image circle IC1 of the optical system 104A and an image circle IC2 of the optical system 104B are also side by side in the horizontal direction. Light that has passed through the optical system 104A forms an image in the image circle IC1, and light that has passed through the optical system 104B forms an image in the image circle IC2. The image capturing unit 105 performs photoelectric conversion on the two optical images respectively formed in the two image circles IC1 and IC2 to obtain analog image signals, and outputs the analog image signals to an A/D conversion unit 106. The A/D conversion unit 106 performs A/D conversion processing on the input analog image signals to obtain digital image data, and outputs (stores) the digital image data to the RAM 103.
Note that in the first embodiment, one obtained image includes two image regions captured by one imaging element via two optical systems, but the method for acquiring the two images is not limited to this. For example, two images respectively captured via two optical systems may be obtained separately using two imaging elements.
The image processing unit 107 performs various types of image processing on image data stored in the RAM 103, such as white balance adjustment, color interpolation, reduction/enlargement, filtering, encoding, and decoding. The image processing unit 107 can also generate image data for stereoscopic viewing by subjecting image data (data representing an image that includes two image regions corresponding to the two image circles IC1 and IC2 in FIG. 6) to various types of image processing that take shift of the optical center into consideration. Shift of the optical center corresponds to shift between the center of the image circle IC1 and the center of the image circle IC2, and also corresponds to shift between the optical axis of the optical system 104A and the optical axis of the optical system 104B. The image processing unit 107 can also subject image data to image processing for removing a foreign object (e.g., a foreign object adhered to an optical system or a scratch on an optical system) that appears in one of the two image regions respectively corresponding to the two image circles IC1 and IC2.
A storage medium 108 stores various types of data. For example, image data stored in the RAM 103 (e.g., image data subjected to image processing by the image processing unit 107 or image data output from the A/D conversion unit 106) is stored in a predetermined file format in the storage medium 108. The storage medium 108 may be a storage device that can be mounted to and removed from the image capturing device 100, and may be a memory card, for example. A communication unit 109 transmits and receives various types of data to and from an external device through wired or wireless communication. For example, the communication unit 109 transmits an image file stored in the storage medium 108 to an external device.
A display unit 110 displays various types of images. For example, the display unit 110 displays images captured and stored in the storage medium 108, live view images, and menu screens. By displaying live view images, the display unit 110 can be used as an electronic viewfinder.
A measurement unit 112 includes various types of sensors such as a gyro sensor and a distance sensor, and acquires various types of information such as information regarding the posture of the image capturing device 100 and information regarding the distance from the image capturing device 100 to the object.

An operation unit 111 is a group of input devices for allowing the user to input various types of instructions to the image capturing device 100, and includes various types of input devices such as a shutter button, a menu button, direction keys, and an enter key. If the display unit 110 is a touch display, the display unit 110 also serves as the operation unit 111. Note that the operation unit 111 may include an input device that does not require physical operation, such as a combination of a microphone and a voice command recognition unit, or a combination of a line-of-sight detection sensor and a line-of-sight input recognition unit.

Image Processing Unit

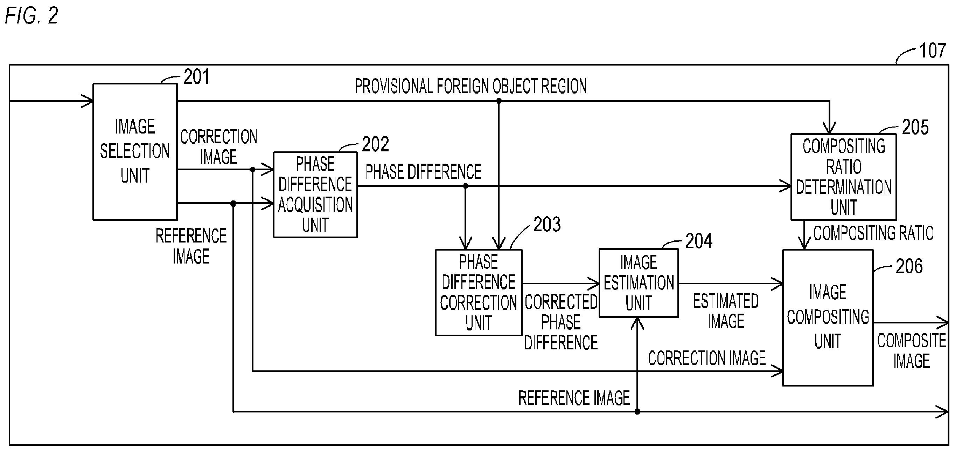

FIG. 2 is a block diagram illustrating an example of the configuration of the image processing unit 107. Note that in the first embodiment, an image that includes two image regions respectively corresponding to the image circles IC1 and IC2 is acquired, but in the following, the two image regions are each described as an image.

An image selection unit 201 selects one of two images (two image regions respectively corresponding to the image circles IC1 and IC2) captured via the optical systems 104A and 104B as a reference image, and selects the other image as a correction target image. For example, the image selection unit 201 aligns the captured current image (current frame) with a past image read out from the RAM 103 (e.g., the frame immediately before the current frame), and calculates a value (correlation value) related to the correlation between the images. The image selection unit 201 calculates the correlation value for the current image corresponding to the optical system 104A (image circle IC1) and for the current image corresponding to the optical system 104B (image circle IC2). The image selection unit 201 then compares the two calculated correlation values, selects the one of the two current images that has a stronger correlation with the past image as the reference image, and selects the image that has a weaker correlation with the past image as the correction target image.

The image selection unit 201 calculates a sum of absolute differences as the correlation value using Expression 1 below, for example.
[Math. 1]

$$SAD1 = \sum_i \sum_j |f(i,j) - g(i,j)| \quad \cdot\cdot\cdot (\text{Exp. } 1)$$

In Expression 1, f(i,j) represents the pixel value at the coordinates (i,j) (horizontal position, vertical position) in the current image, and g(i,j) represents the pixel value at the coordinates (i,j) in the past image. The pixel value g(i,j) is subtracted from the pixel value f(i,j) to calculate an absolute value (absolute difference), and the sum of absolute differences corresponding to a plurality of coordinates is calculated as a correlation value SAD1 (sum of absolute differences). The smaller the correlation value SAD1 is, the stronger the correlation between the current image and the past image is, whereas the larger the correlation value SAD1 is, the weaker the correlation between the current image and the past image is. The correlation value SAD1 is also a value related to the degree of similarity between the current image and the past image. The smaller the correlation value SAD1 is, the higher the degree of similarity between the current image and the past image is, whereas the larger the correlation value SAD1 is, the lower the degree of similarity between the current image and the past image is.

The image selection unit 201 calculates the correlation value SAD1 for each of a plurality of regions in the current image. Then, when selecting the reference image and the correction target image, the image selection unit 201 uses a representative value as the correlation value, such as the average value or total value of the correlation values SAD1 corresponding to the regions. The image selection unit 201 may calculate the sum of absolute differences for the entire image, and use that sum of absolute differences when selecting the reference image and the correction target image. The regions for which the correlation value SAD1 is calculated may be one-pixel regions, or may be regions made up of a plurality of pixels. The correlation value SAD1 for one pixel is the sum of absolute differences in a region of a predetermined size (e.g., a region of 5 pixels in the horizontal direction $\times$ 5 pixels in the vertical direction) centered on the pixel for which the correlation value SAD1 is to be calculated, for example. The pattern of the regions may or may not be a predetermined fixed pattern. Templates respectively corresponding to patterns may be prepared in advance in the ROM 102. The image selection unit 201 may select a template designated by the user or a template that corresponds to the image capturing condition from among a plurality of templates and use the selected template.

Note that the correlation value is not limited to being a sum of absolute differences, and may be another correlation value such as a sum of squared differences (SSD) or a normalized cross correlation (NCC). Furthermore, correlation values for each pixel and correlation values for regions made up of a plurality of pixels may both be used. The reference image and the correction target image may be designated by the user. The correlation value may be any value as long as it is a value related to the correlation between the reference image and the correction target image (e.g., a value indicating the strength (weakness) of the correlation).

Furthermore, the image selection unit 201 detects a region whose correlation value is larger than a threshold value (i.e., the correlation with the past image is weaker than the threshold value) in the correction target image as a provisional foreign object region (foreign object region), and outputs information on the provisional foreign object region. The threshold value may be a predetermined fixed value, or may be a value designated by the user. A plurality of threshold values may be prepared in advance in the ROM 102. The image selection unit 201 may select a threshold value that corresponds to the image capturing condition from a plurality of thresholds and use the selected threshold value.

After the series of processing described above, the image selection unit 201 outputs (stores) the two current images that correspond to the optical systems 104A and 104B (image circles IC1 and IC2) and the information on the provisional foreign object region to the RAM 103.

A phase difference acquisition unit 202 reads the reference image and the correction target image that were selected by the image selection unit 201 from the RAM 103, and acquires an evaluation value (phase difference) related to parallax with respect to the reference image for each of a plurality of regions in the correction target image. The phase difference acquisition unit 202 then outputs (stores) the acquired evaluation values to the RAM 103.

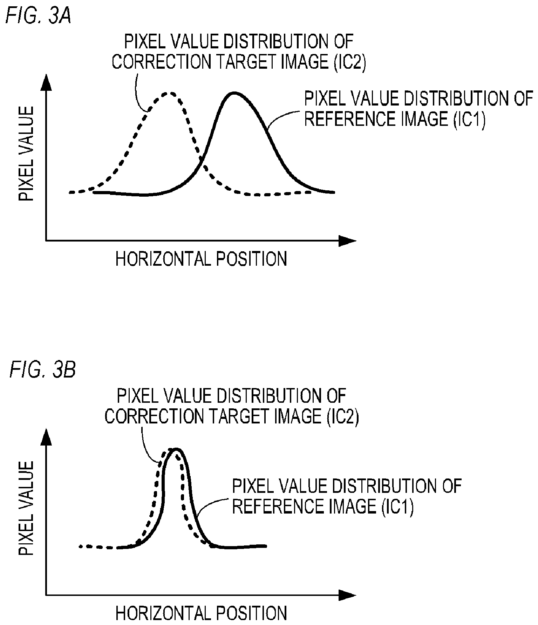

FIGS. 3A and 3B are schematic diagrams illustrating an example of the pixel value distribution of the reference image and the pixel value distribution of the correction target image. The horizontal axes in FIGS. 3A and 3B indicate horizontal positions, and the vertical axes in FIGS. 3A and 3B indicate pixel values. FIG. 3A illustrates a situation where the distance from the image capturing device 100 to the object is far (the object in the image is out of focus). In FIG. 3A, the pixel value distribution of the reference image and the pixel value distribution of the correction target image are significantly shifted relative to each other, and the amount of parallax between the reference image and the correction target image is large. When the object moves closer to the image capturing device 100 from the situation shown in FIG. 3A (the focus state of the object approaches the in-focus state), as shown in FIG. 3B, the amount of shift between the pixel value distribution of the reference image and the pixel value distribution of the correction target image decreases, and the parallax between the reference image and the correction target image decreases. It can be seen from FIGS. 3A and 3B that the correlation between the reference image and the correction target image is related to the parallax between the reference image and the correction target image.

The phase difference acquisition unit 202 calculates the sum of absolute differences as the evaluation value (phase difference) using Expression 2 below, for example.

[Math. 2]

$$SAD2 = \sum_i \sum_j |h(i,j) - k(i,j)| \quad \cdot \cdot \cdot (\text{Exp. 2})$$

In Expression 2, $h(i,j)$ represents the pixel value at the coordinates $(i,j)$ (horizontal position, vertical position) in the reference image, and $k(i,j)$ represents the pixel value at the coordinates $(i,j)$ in the correction target image. The pixel value $h(i,j)$ is subtracted from the pixel value $k(i,j)$ to calculate an absolute value (absolute difference), and the sum of absolute differences corresponding to a plurality of coordinates is calculated as a phase difference SAD2 (sum of absolute differences). The smaller the phase difference SAD2 is, the stronger the correlation between the reference image and the correction target image is, and the smaller the parallax between the reference image and the correction target image is. The larger the phase difference SAD2 is, the weaker the correlation between the reference image and the correction target image is, and the larger the parallax between the reference image and the correction target image is. The phase difference SAD2 is also a value related to the degree of similarity between the reference image and the correction target image. The smaller the phase difference SAD2 is, the higher the degree of similarity between the reference image and the correction target image, whereas the larger the phase difference SAD2 is, the lower the degree of similarity between the reference image and the correction target image is.

The phase difference acquisition unit 202 calculates the phase difference SAD2 for each of a plurality of regions in the current image. The regions for which the phase difference SAD2 is calculated may be one-pixel regions, or may be regions made up of a plurality of pixels. The phase difference SAD2 for one pixel is the sum of absolute differences in a region of a predetermined size (e.g., a region of 5 pixels in the horizontal direction × 5 pixels in the vertical direction) centered on the pixel for which the phase difference SAD2 is to be calculated, for example. The pattern of the regions may or may not be a predetermined fixed pattern. Templates respectively corresponding to patterns may be prepared in advance in the ROM 102. The phase difference acquisition unit 202 may select a template designated by the user or a template that corresponds to the image capturing condition from among a plurality of templates and use the selected template.

Note that the evaluation value (phase difference) is not limited to being a sum of absolute differences, and may be another correlation value such as a sum of squared differences (SSD) or a normalized cross correlation (NCC). Furthermore, evaluation values for each pixel and evaluation values for regions made up of a plurality of pixels may both be used. The evaluation value calculation formula used by the phase difference acquisition unit 202 may be the same as the correlation value calculation formula used by the image selection unit 201, or may be different. The evaluation value may be any value as long as it is a value related to the parallax of the correction target image with respect to the reference image (e.g., a value indicating the magnitude of the parallax).

A phase difference correction unit 203 reads out information on the provisional foreign object region detected by the image selection unit 201 and the phase differences of regions acquired by the phase difference acquisition unit 202 from the RAM 103, and corrects the phase differences of the regions based on the provisional foreign object region. The phase difference correction unit 203 then outputs (stores) the corrected phase differences of the regions to the RAM 103. For example, the phase difference correction unit 203 detects, as a final foreign object region, a region in which the distance from the provisional foreign object region is shorter than a threshold value and in which the phase difference is larger than a threshold value (the correlation between the reference image and the correction target image is weaker than a threshold value). The phase difference correction unit 203 then obtains an evaluation value by performing spline interpolation using the phase differences of regions corresponding to the periphery of the final foreign object region, and corrects the phase differences of regions corresponding to the foreign object region. The distance threshold value and the phase difference threshold value may be predetermined fixed values, or may be values designated by the user. A plurality of threshold values may be prepared in advance in the ROM 102. The phase difference correction unit 203 may select threshold values that correspond to the image capturing condition from a plurality of threshold values and use the selected threshold values.

Note that the method for correcting the phase difference is not limited to the above method, and for example, various types of known interpolation processing can be used. The reference image may be subjected to high-pass filter processing to detect the boundary (outline) of the object, and the phase difference may be corrected with consideration given to the boundary. Information on the distance from the image capturing device 100 to the object may be acquired from the measurement unit 112, and the phase difference may be corrected with consideration given to the distance.

Furthermore, in the first embodiment, a region that satisfies all of the following three Conditions 1 to 3 is detected as a foreign object region in the correction target image, but the predetermined conditions for detecting a foreign object region are not limited to these Conditions 1 to 3. For example, a region (region detected by the image selection unit 201) that satisfies only Condition 1 may be detected as the final foreign object region without giving consideration to Conditions 2 and 3. A region that satisfies only Condition 3 may be detected as the final foreign object region without giving consideration to Conditions 1 and 2. In such cases, the image selection unit 201 does not need to detect a provisional foreign object region.

Condition 1: Correlation with past image is weaker than threshold value
Condition 2: Distance from region whose correlation with past image is weaker than threshold value is shorter than threshold value
Condition 3: Correlation with reference image is weaker than threshold value

An image estimation unit 204 reads out the corrected phase differences of regions obtained by the phase difference correction unit 203 and the reference image selected by the image selection unit 201 from the RAM 103, and generates an estimated image from the reference image based on the read phase difference of the regions. The image estimation unit 204 outputs (stores) the estimated image to the RAM 103. For example, the image estimation unit 204 generates the estimated image by, for each pixel (each region) of the reference image, performing processing for determining a pixel shift amount based on the phase difference and moving the pixel (region) of the reference image by the pixel shift amount. Note that the method for generating the estimated image is not limited to this, and for example, the estimated image may be generated using a result of machine learning (a trained model).

A compositing ratio determination unit 205 reads out, from the RAM 103, information on the provisional foreign object region detected by the image selection unit 201 and the phase differences of the regions acquired by the phase difference acquisition unit 202. Similarly to the phase difference correction unit 203, the compositing ratio determination unit 205 detects, as a final foreign object region, a region in which the distance from the provisional foreign object region is shorter than a threshold value and in which the phase difference is larger than a threshold value (the correlation between the reference image and the correction target image is weaker than a threshold value). Note that the compositing ratio determination unit 205 may acquire information on the final foreign object region detected by the phase difference correction unit 203. Then, for each of a plurality of regions of the correction target image, the compositing ratio determination unit 205 determines a compositing ratio for compositing the estimated image with the correction target image based on the final foreign object region. The compositing ratio determination unit 205 outputs (stores) the determined compositing ratios of the regions to the RAM 103. For example, in the foreign object region, the compositing ratio (the ratio of the estimated image to the correction target image) is determined to be 100%, and outside the foreign object region, the compositing ratio is determined so as to change in a continuous manner from 100% to 0% with increasing distance from the foreign object region. As described above, the provisional foreign object region may be used as the final foreign object region, or a region in which the phase difference output from the phase difference acquisition unit 202 is larger than a threshold value (a region in which the correlation with the reference image is weaker than a threshold value) may be used as the final foreign object region.

An image compositing unit 206 reads, from the RAM 103, the correction target image selected by the image selection unit 201, the estimated image generated by the image estimation unit 204, and the compositing ratios of the regions determined by the compositing ratio determination unit 205. The image compositing unit 206 generates a composite image by, for each of a plurality of regions in the correction target image, compositing the pixel values of the correction target image and the pixel values of the estimated image at the compositing ratio determined by the compositing ratio determination unit 205. The correction target image is thus corrected to obtain a composite image.

Image Correction Processing

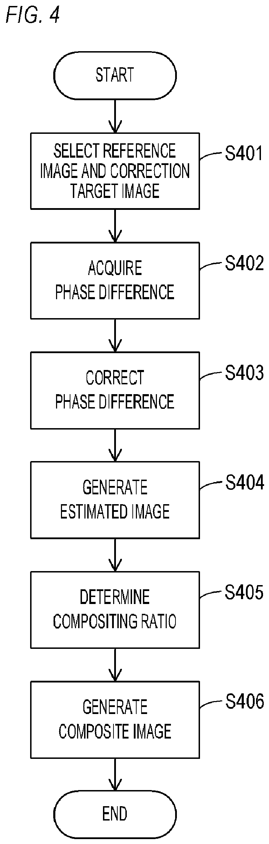

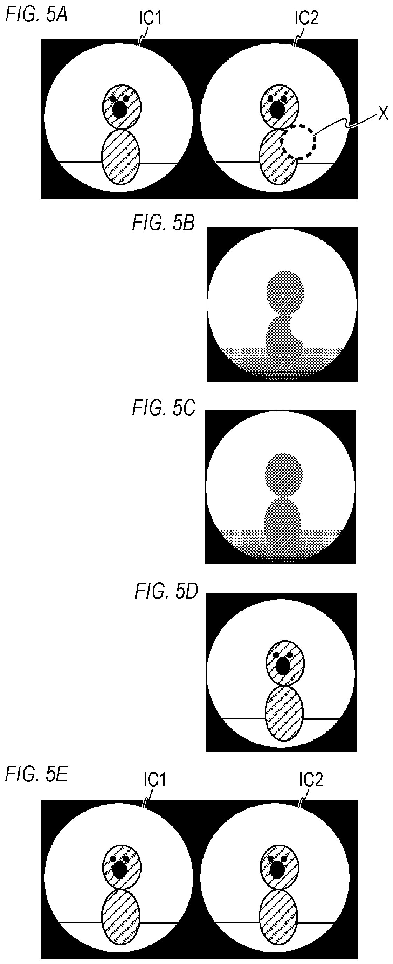

FIG. 4 is a flowchart illustrating an example of image correction processing according to the first embodiment. FIGS. 5A to 5E are schematic diagrams illustrating examples of various types of data used in image correction processing according to the first embodiment.

In step S401, the control unit 101 controls the image selection unit 201 to select one of the two images corresponding to the optical systems 104A and 104B (image circles IC1 and IC2) as a reference image, and to select the other image as the correction target image. The control unit 101 then moves to step S402. FIG. 5A illustrates an example of two images respectively corresponding to the image circles IC1 and IC2. In FIG. 5A, a foreign object does not appear in the image corresponding to the image circle IC1, but a foreign object X appears in the image corresponding to the image circle IC2. Therefore, the image corresponding to the image circle IC1 is selected as the reference image, and the image corresponding to the image circle IC2 is selected as the correction target image.

In step S402, the control unit 101 controls the phase difference acquisition unit 202 to acquire an evaluation value (phase difference) related to parallax with respect to the reference image for each of a plurality of regions in the correction target image. The control unit 101 then moves to step S403. In FIG. 5B, an example of the phase difference distribution in shown by shading. In FIG. 5B, phase difference is shown by shading in which the larger the phase difference is, the lighter (paler) the color is (the weaker the correlation between the reference image and the correction target image is, the lighter the color is; and the larger the parallax between the reference image and the correction target image is, the lighter the color is). Also, the smaller the phase difference is, the darker the color is (the stronger the correlation between the reference image and the correction target image is, the darker the color is; and the smaller the parallax between the reference image and the correction target image is, the darker the color is). In FIG. 5B, in the region corresponding to the foreign object X, the correlation between the reference image and the correction target image is weak, and thus the phase difference is large (approximately equivalent to the phase difference of the background).

In step S403, the control unit 101 controls the phase difference correction unit 203 to correct the phase differences of the regions acquired in step S402. The control unit 101 then moves to step S404. FIG. 5C illustrates an example of the corrected phase differences of the regions. In FIG. 5C, the phase difference in the region corresponding to the foreign object X is corrected to a value close to the phase difference in the case where there is no foreign object X.

In step S404, the control unit 101 controls the image estimation unit 204 to generate an estimated image from the reference image based on the corrected phase differences of the regions obtained in step S403. The control unit 101 then moves to step S405. FIG. 5D illustrates an example of the estimated image. A foreign object does not appear in the estimated image in FIG. 5D.

In step S405, the control unit 101 controls the compositing ratio determination unit 205 to determine compositing ratios respectively corresponding to a plurality of regions in the correction target image, based on the foreign object region. The control unit 101 then moves to step S406.

In step S406, the control unit 101 controls the image compositing unit 206 to generate a composite image by, for each of the regions in the correction target image, compositing the pixel values of the correction target image and the pixel values of the estimated image at the compositing ratio determined in step S405. The correction target image is thus corrected to obtain a composite image. FIG. 5E illustrates an example of the two corrected images (the two images respectively corresponding to the optical systems 104A and 104B (image circles IC1 and IC2)). In FIG. 5E, no foreign object appears in either of the two images.

As described above, according to the first embodiment, the pixel values in the foreign object region in one of the two images corresponding to the two optical systems are corrected using the pixel values of the other one of the two images. According to this configuration, an image in which a foreign object appears can be favorably corrected into an image in which the foreign object does not appear, and it is possible to suppress deterioration in the quality of stereoscopic viewing caused by the foreign object.

Note that although an example in which there is only one foreign object has been described, there is no particular limitation on the number of foreign objects, and a plurality of foreign objects may be present. Also, although an example has been described in which a reference image and a correction target image are determined and the correction target image is corrected, the present invention is not limited to this. For example, a configuration is also possible in which, if a foreign object appears in both of the two images corresponding to the two optical systems, one of the images is used to remove the foreign object from the other image, and the other image is used to remove the foreign object from the one image.

Second Embodiment

A second embodiment of the present invention will be described below. Note that, in the following, descriptions of the points that are the same as in the first embodiment (e.g., configurations and processing that are the same as in the first embodiment) will be omitted, and only points that are different from the first embodiment will be described.

Image Capturing Device

The configuration of the image capturing device according to the second embodiment is similar to that of the first embodiment (FIG. 1).

Image Processing Unit

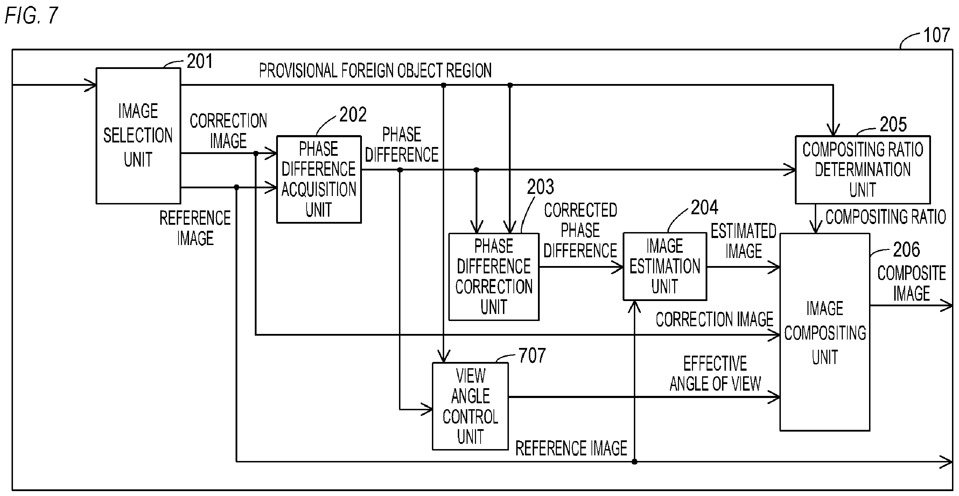

FIG. 7 is a block diagram illustrating an example of the configuration of the image processing unit 107 according to the second embodiment. The image processing unit 107 according to the second embodiment includes the components shown in the first embodiment (FIG. 2) and a view angle control unit 707.

The view angle control unit 707 reads, from the RAM 103, information on the provisional foreign object region detected by the image selection unit 201 and the phase differences of the regions acquired by the phase difference acquisition unit 202. Similarly to the phase difference correction unit 203, the view angle control unit 707 detects, as a final foreign object region, a region in which the distance from the provisional foreign object region is shorter than a threshold value and in which the phase difference is larger than a threshold value (the correlation between the reference image and the correction target image is weaker than a threshold value). Note that the view angle control unit 707 may acquire information on the final foreign object region detected by the phase difference correction unit 203. The view angle control unit 707 also reads angle of view information indicating a predetermined angle of view (predetermined region) from the RAM 103, and determines an effective angle of view based on the final foreign object region and the predetermined angle of view. The view angle control unit 707 outputs (stores) information on the determined effective angle of view to the RAM 103. The predetermined angle of view is the minimum allowable effective angle of view. The predetermined angle of view may be a predetermined fixed angle of view or may be an angle of view designated by the user. Information on a plurality of angles of view may be prepared in advance in the ROM 102. The view angle control unit 707 may select an angle of view that corresponds to an image capturing condition from a plurality of angle of views and use the selected angle of view.

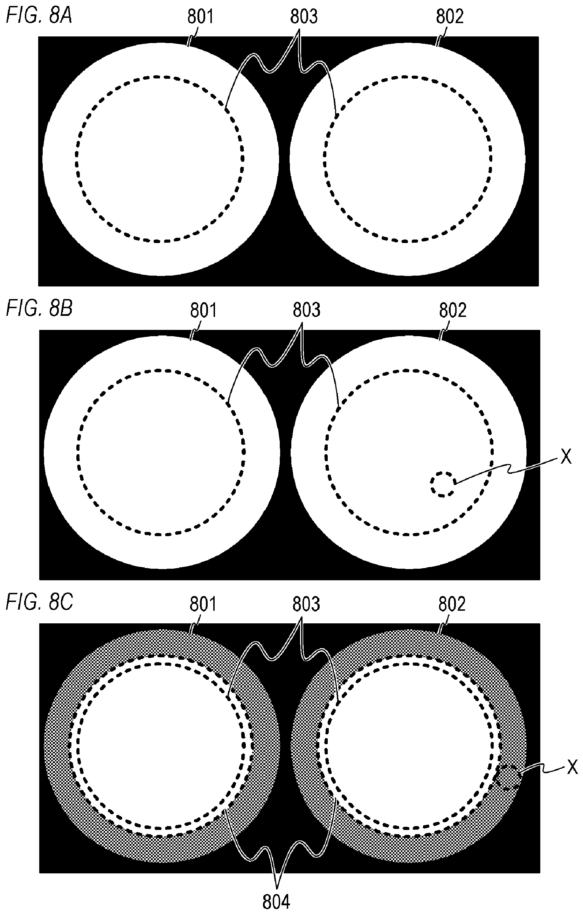

FIGS. 8A to 8C are schematic diagrams illustrating an example of a method for determining the effective angle of view. In FIGS. 8A to 8C, an angle of view 803 (minimum allowable effective angle of view) has been set in advance for an image 801 corresponding to the optical system 104A (image circle IC1) and for an image 802 corresponding to the optical system 104B (image circle IC2).

FIG. 8A shows the case where no foreign object appears in either the image 801 or the image 802. In this case, it is determined that the effective angle of view is the entirety of the image 801 and the entirety of the image 802. FIG. 8B shows the case where the foreign object X appears inside the angle of view 803. In this case as well, it is determined that the effective angle of view is the entirety of the image 801 and the entirety of the image 802. FIG. 8C shows the case where the foreign object X appears outside the angle of view 803. In this case, an angle of view 804 is determined as the effective angle of view for the image 801 and the image 802. The angle of view 804 is an angle of view that includes the angle of view 803 and is externally tangent to the region of the foreign object X.

Note that the effective angle of view in the case of FIG. 8C is not limited to being the angle of view 804, and may be the angle of view 803, for example. Furthermore, the effective angle of view does not necessarily need to have the same shape as the image circle. For example, in the case where the optical system includes a fisheye lens and a fisheye image is captured, the effective angle of view may have a shape that is based on the image obtained after performing image processing such as equirectangular cylindrical transformation or perspective projection transformation.

The image compositing unit 206 according to the second embodiment generates a composite image by performing processing similar to that in the first embodiment. However, when generating a composite image, the image compositing unit 206 according to the second embodiment reads information on the effective angle of view determined by the view angle control unit 707 from the RAM 103, and invalidates the region outside the effective angle of view. For example, the image compositing unit 206 invalidates the region outside the effective angle of view by replacing the pixel values in the region outside the effective angle of view with a predetermined pixel value (e.g., the black pixel value) or trimming the region outside the effective angle of view.

Image Correction Processing

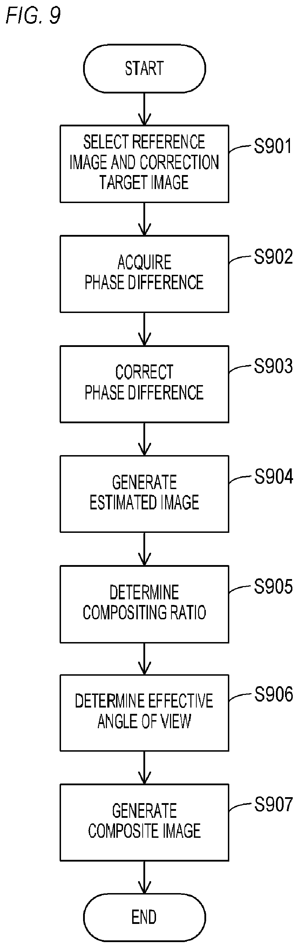

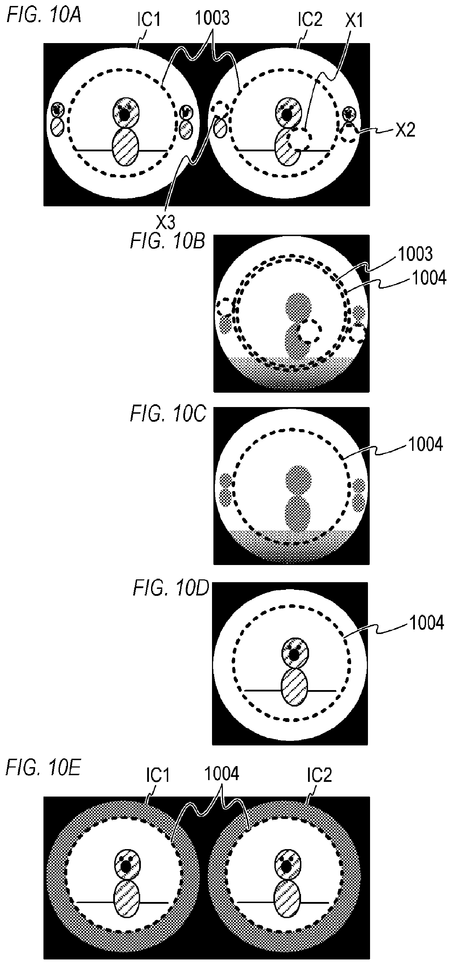

FIG. 9 is a flowchart illustrating an example of image correction processing according to the second embodiment. FIGS. 10A to 10E are schematic diagrams illustrating examples of various types of data used in the image correction processing according to the second embodiment.

Steps S901 to S905 are similar to steps S401 to S405 in the first embodiment (FIG. 4).

FIG. 10A illustrates an example of two images respectively corresponding to the optical systems 104A and 104B (image circles IC1 and IC2). In FIG. 10A, no foreign objects appear in the image corresponding to the image circle IC1, but foreign three objects X1 to X3 appear in the image corresponding to the image circle IC2. For this reason, in step S901, the image corresponding to the image circle IC1 is selected as the reference image, and the image corresponding to the image circle IC2 is selected as the correction target image. In FIG. 10A, an angle of view 1003 (minimum allowable effective angle of view) is set in advance for the reference image and the correction target image.

In step S902, the phase difference shown in FIG. 10B is acquired, for example. In FIG. 10B, an example of the phase difference distribution in shown by shading. In FIG. 10B, phase difference is shown by shading in which the larger the phase difference is, the lighter (paler) the color is (the weaker the correlation between the reference image and the correction target image is, the lighter the color is, and the larger the parallax between the reference image and the correction target image is, the lighter the color is). Also, the smaller the phase difference is, the darker the color is (the stronger the correlation between the reference image and the correction target image is, the darker the color is; and the smaller the parallax between the reference image and the correction target image is, the darker the color is). In FIG. 10B, in the regions corresponding to the foreign objects X1 to X3, the correlation between the reference image and the correction target image is weak, and thus the phase difference is large (approximately equivalent to the phase difference of the background).

In step S903, the phase difference shown in FIG. 10B is corrected to the phase difference shown in FIG. 10C, for example. FIG. 10C illustrates an example of the corrected phase differences of the regions. In FIG. 10C, the phase differences in the regions corresponding to the foreign objects X1 to X3 are corrected to values close to the phase difference in the case where there are no foreign objects X1 to X3.

In step S904, the estimated image shown in FIG. 10D is generated, for example. FIG. 10D illustrates an example of the estimated image. No foreign objects appear in the estimated image in FIG. 10D.

After step S905, in step S906, the control unit 101 controls the view angle control unit 707 to determine an effective angle of view. In FIG. 10A, the foreign object X1 appears inside the angle of view 1003 (the minimum allowable effective angle of view), and the foreign objects X2 and X3 appear outside the angle of view 1003. In this case, as shown in FIG. 10B, the effective angle of view is determined to be a circular angle of view 1004 that is centered on the center of the correction target image and is tangent to the coordinates closest to the angle of view 1003 among the coordinates in the regions corresponding to the foreign objects X2 and X3.

In step S907, the control unit 101 controls the image compositing unit 206 to generate a composite image by performing processing similar to that in the first embodiment and invalidating the region outside the effective angle of view. FIG. 10E illustrates an example of the two corrected images (the two images respectively corresponding to the optical systems 104A and 104B (image circles IC1 and IC2)). In FIG. 10E, no foreign objects appear in either of the two images. Furthermore, in FIG. 10E, the region outside the angle of view 1004, which is the effective angle of view, has been invalidated.

Note that the processing of step S906 may be performed before the processing of any of the steps S902 to S904. In steps S902 to S904, processing may be performed only on the region inside the effective angle of view. According to this configuration, the processing load can be reduced. The processing in step S906 may be performed in parallel with the processing in steps S902 to S904.

As described above, according to the second embodiment, in the case where a foreign object region is detected outside a predetermined region, the correction target image is corrected to an image in which the foreign object region has been invalidated. According to this configuration as well, an image in which a foreign object appears can be corrected to an image in which the foreign object does not appear. Since a foreign object inside the predetermined region can be removed by the method of first embodiment, deterioration in the quality of stereoscopic viewing can be suppressed.

Note that the above embodiments (including modified examples) are merely examples, and the present invention also encompasses configurations obtained by appropriately modifying or changing the configurations of the above embodiments within the scope of the gist of the present invention. The present invention also encompasses configurations obtained by appropriately combining the configurations of the above embodiments.

According to the present invention, it is possible to suppress deterioration in the quality of stereoscopic viewing caused by a foreign object.

Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

**Claims**

1.  An image processing device comprising:

    acquiring means configured to acquire a first image captured via a first optical system and a second image captured via a second optical system;
    detecting means configured to detect, as a foreign object region, a region satisfying a predetermined condition in one image out of the first image and the second image; and
    correcting means configured to correct a pixel value in the foreign object region in the one image by using a pixel value of another image out of the first image and the second image.

2.  The image processing device according to claim 1, further comprising:
    selecting means configured to select, as the one image, one of the first image and the second image that has a weaker correlation with a past image than another of the first image and the second image.

3.  The image processing device according to claim 1 or 2,
    wherein the predetermined condition includes a condition under which a correlation with a past image is weaker than a threshold value.

4.  The image processing device according to any one of claims 1 to 3,
    wherein the predetermined condition includes a condition under which a distance from a region in which a correlation with a past image is weaker than a threshold value is shorter than a threshold value.

5.  The image processing device according to any one of claims 1 to 4,
    wherein the predetermined condition includes a condition under which a correlation with the other image is weaker than a threshold value.

6.  The image processing device according to any one of claims 1 to 5,
    wherein the correcting means includes:

    generating means configured to generate a third image from the other image; and
    compositing means configured to correct the one image to an image obtained by, for each of a plurality of regions in the one image, compositing a pixel value of the one image and a pixel value of the third image at a compositing ratio determined based on the foreign object region.

7.  The image processing device according to claim 6, further comprising:

second acquiring means configured to acquire an evaluation value related to parallax with respect to the other image for each of a plurality of regions of the one image,

wherein the generating means generates the third image from the other image, based on a plurality of evaluation values corresponding to the plurality of regions.

8. The image processing device according to any one of claims 1 to 7,
wherein in a case where the foreign object region is detected outside a predetermined region, the correcting means corrects the one image to an image in which the foreign object region is invalidated.

9. The image processing device according to claim 8,
wherein the predetermined region is a region designated by a user.

10. The image processing device according to claim 8 or 9,
wherein in a case where the foreign object region is detected outside the predetermined region, the correcting means corrects the one image to an image in which a region outside the predetermined region is invalidated.

11. The image processing device according to claim 8 or 9,
wherein in a case where the foreign object region is detected outside the predetermined region, the correcting means corrects the one image to an image in which a region outside a region that includes the predetermined region and that is externally tangent to the foreign object region is invalidated.

12. The image processing device according to any one of claims 8 to 11,
wherein in a case where the foreign object region is detected outside the predetermined region, the correcting means invalidates the foreign object region by replacing a pixel value of the foreign object region with a predetermined pixel value.

13. The image processing device according to any one of claims 8 to 11,
wherein in a case where the foreign object region is detected outside the predetermined region, the correcting means invalidates the foreign object region by trimming the foreign object region.

14. An image processing method comprising:

acquiring a first image captured via a first optical system and a second image captured via a second optical system;
detecting, as a foreign object region, a region satisfying a predetermined condition in one image out of the first image and the second image; and
correcting a pixel value in the foreign object region in the one image by using a pixel value of another image out of the first image and the second image.

15. A program that causes a computer to function as each means of the image processing device according to any one of claims 1 to 13.

16. A computer readable medium storing a program that causes a computer to function as each means of the image processing device according to any one of claims 1 to 13.

*FIG. 1*

EP 4 475 525 A1

FIG. 2

*FIG. 3A*

PIXEL VALUE DISTRIBUTION OF
CORRECTION TARGET IMAGE (IC2)

PIXEL VALUE DISTRIBUTION OF
REFERENCE IMAGE (IC1)

PIXEL VALUE

HORIZONTAL POSITION

*FIG. 3B*

PIXEL VALUE DISTRIBUTION OF
CORRECTION TARGET IMAGE (IC2)

PIXEL VALUE DISTRIBUTION OF
REFERENCE IMAGE (IC1)

PIXEL VALUE

HORIZONTAL POSITION

*FIG. 4*

```
           ┌─────────┐
           │  START  │
           └─────────┘
                │
                ▼
     ┌─────────────────────┐
     │  SELECT REFERENCE   │──── S401
     │ IMAGE AND CORRECTION│
     │    TARGET IMAGE     │
     └─────────────────────┘
                │
                ▼
     ┌─────────────────────┐
     │      ACQUIRE        │──── S402
     │  PHASE DIFFERENCE   │
     └─────────────────────┘
                │
                ▼
     ┌─────────────────────┐
     │      CORRECT        │──── S403
     │  PHASE DIFFERENCE   │
     └─────────────────────┘
                │
                ▼
     ┌─────────────────────┐
     │     GENERATE        │──── S404
     │  ESTIMATED IMAGE    │
     └─────────────────────┘
                │
                ▼
     ┌─────────────────────┐
     │     DETERMINE       │──── S405
     │  COMPOSITING RATIO  │
     └─────────────────────┘
                │
                ▼
     ┌─────────────────────┐
     │     GENERATE        │──── S406
     │  COMPOSITE IMAGE    │
     └─────────────────────┘
                │
                ▼
           ┌─────────┐
           │   END   │
           └─────────┘
```

FIG. 5A

FIG. 5B

FIG. 5C

FIG. 5D

FIG. 5E

*FIG. 6*

FIG. 7

FIG. 8A

FIG. 8B

FIG. 8C

*FIG. 9*

START

SELECT REFERENCE IMAGE AND CORRECTION TARGET IMAGE — S901

ACQUIRE PHASE DIFFERENCE — S902

CORRECT PHASE DIFFERENCE — S903

GENERATE ESTIMATED IMAGE — S904

DETERMINE COMPOSITING RATIO — S905

DETERMINE EFFECTIVE ANGLE OF VIEW — S906

GENERATE COMPOSITE IMAGE — S907

END

FIG. 10A

FIG. 10B

FIG. 10C

FIG. 10D

FIG. 10E

Europäisches
Patentamt

European
Patent Office

Office européen
des brevets

# EUROPEAN SEARCH REPORT

**Application Number**

EP 24 17 9773

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/009462 A1 (MCNAMER MICHAEL [US] ET AL) 9 January 2014 (2014-01-09) | 1,5-16 | INV. H04N13/106 H04N13/128 |
| A | * paragraphs [0039], [0040]; figures 1,5 * | 2-4 | |
| | ----- | | |

TECHNICAL FIELDS
SEARCHED (IPC)

H04N

The present search report has been drawn up for all claims

| Place of search | Date of completion of the search | Examiner |
|---|---|---|
| The Hague | 26 September 2024 | Wahba, Alexander |

EPO FORM 1503 03.82 (P04C01)

**ANNEX TO THE EUROPEAN SEARCH REPORT
ON EUROPEAN PATENT APPLICATION NO.**

EP 24 17 9773

This annex lists the patent family members relating to the patent documents cited in the above-mentioned European search report.
The members are as contained in the European Patent Office EDP file on
The European Patent Office is in no way liable for these particulars which are merely given for the purpose of information.

26-09-2024

| Patent document cited in search report | Publication date | Patent family member(s) | Publication date |
|---|---|---|---|
| US 2014009462 A1 | 09-01-2014 | US 2014009462 A1 | 09-01-2014 |
| | | WO 2013158784 A1 | 24-10-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010130549 A